# NEUE EUROPÄISCHE PATENTSCHRIFT

(11) **EP 2 135 662 B2**
(45) Veröffentlichungstag und Bekanntmachung des Hinweises auf die Entscheidung über den Einspruch: **21.11.2012**
(45) Hinweis auf die Patenterteilung: 30.06.2010
(21) Anmeldenummer: 09006067.4
(22) Anmeldetag: 04.05.2009
(51) Int. Cl.: B01D 46/52

(54) **Komprimierbares Filterelement mit zueinander geneigten Endkappen**
Compressable filter element with end caps which are inclined to each other
Elément filtrant compressible avec des capuchons d'extrémité inclinés les uns vers les autres

(30) Priorität: 19.06.2008 DE 102008028834
(43) Veröffentlichungstag der Anmeldung: 23.12.2009
(73) Patentinhaber: Carl Freudenberg KG, 69469 Weinheim (DE); Montaplast GmbH, 51597 Morsbach (DE)
(72) Erfinder: Felber, Uwe, 69518 Abtsteinach (DE); Stahl, Ulrich, 69514 Laudenbach (DE); Marin, Claudio, 69126 Heidelberg (DE); Arns, Christian, 57482 Wenden (DE)

(56) Entgegenhaltungen:
- EP-A- 1 867 378
- WO-A-2005/115581
- WO-A1-2009/019244
- DE-A1- 1 636 124
- DE-A1-102004 054 274
- DE-U1-202005 003 046
- FR-A- 798 869

## Beschreibung

### Technisches Gebiet

Die Erfindung betrifft ein Filterelement gemäß dem Oberbegriff des Patentanspruchs 1.

### Stand der Technik

Die EP 1 867 378 A1 zeigt ein solches Filterelement mit parallel zueinander orientierten Endkappen. Die DE 10 2004 054 274 A1 offenbart Gehäuse, die teleskopartig zusammenschiebbar sind, und insbesondere ein Filterelement, welches in einem zweiteiligen Gehäuse aufgenommen ist. Aus der FR 798 869 A ist eine Kammer bekannt, die eine absorbierende Substanz aufnimmt und eine konisch geformte Grundfläche aufweist. Die WO 2005/115 581 A1zeigt ein zylindrisches Filterelement mit einem zu einer ersten Endkappe geneigten, vom Filterelement abragenden elliptischen Flansch, dem eine Dichtung zugeordnet ist. Aus der DE 20 2005 003 046 U1 ist ein Filterelement bekannt, bei dem das Filtermedium durch einen Gas führenden Stutzen unterbrochen ist.

Filterelemente der eingangs genannten Art sind aus dem Stand der Technik bereits bekannt und finden insbesondere in der Motorzuluftfiltration in Kraftfahrzeugen, nämlich in deren Ansaugsystemen, Anwendung.

Die bekannten Filterelemente sind als Filterpatronen, insbesondere als Rundfilter, ausgestattet. Dabei ist ein Filtermedium sandwichartig zwischen zwei parallel zueinander orientierten Endkappen angeordnet. In den Endkappen ist ein axial angeordneter Strömungskanal ausgebildet, der an ein Ansaugsystem angeschlossen werden kann.

Bei den bekannten Filterelementen wird der Fluidstrom, der durch die Wandfläche hindurchtritt, nämlich zum Motor hindurchgesaugt wird, durch den endkappenseitigen Strömungskanal geführt.

Diese konstruktive Ausgestaltung erfordert eine bauraumbeanspruchende Fluidführung. Bauräume sind jedoch in modernen Kraftfahrzeugen äußerst knapp bemessen.

### Darstellung der Erfindung

Der Erfindung liegt daher die Aufgabe zugrunde, ein Filterelement der eingangs genannten Art derart auszugestalten und weiterzubilden, dass dieses in engen Bauräumen verwendet werden kann.

Erfindungsgemäß wird die voran stehende Aufgabe mit den Merkmalen des Patentanspruchs 1 gelöst.

Danach ist das eingangs genannte Filterelement dadurch gekennzeichnet, dass die Bauteile geneigt zueinander orientiert sind oder zueinander geneigte Flächen aufweisen, wobei die Bauteile zwei zueinander geneigte Ebenen des Filtermediums begrenzen und wobei das Filtermedium an verschiedenen Stellen verschiedene Höhen h aufweist.

Erfindungsgemäß ist erkannt worden, dass zwei Bauteile, die geneigt zueinander angeordnet sind oder Flächen aufweisen, die zueinander geneigt sind, eine Anordnung des Filterelements in engen Baurämen erlauben. Die Bauteile sind dabei erfindungsgemäß als das Filtermedium beidseitig abdeckende und aufnehmende Endkappen ausgebildet. Die geneigte Anordnung der Bauteile führt zu einer Abschrägung des Filterelements, so dass dieses auch in engen geneigten Bauräumen angeordnet werden kann.

Die Bauteile begrenzen zwei zueinander geneigte Ebenen des Filtermediums. Hierbei ist vorteilhaft, dass ein abgeschrägtes im Wesentlichen zylinderförmiges Filtermedium mit geneigten Grundflächen in die Bauteile eingeklebt oder von diesen umspritzt werden kann. Bei einem gefalteten Filtermedium können die Faltenstimseiten in den geneigten Ebenen liegen und die Faltenrücken sich im Wesentlichen orthogonal zu einem Bauteil erstrecken.

Das Filtermedium weist an verschiedenen Stellen verschiedene Höhen h auf. Durch diese konkrete Ausgestaltung ist es möglich, ein Filterelement zwischen zwei Bauteilen zu positionieren, wobei in einem Bauteil ein Strömungskanal ausgebildet ist. Der Strömungskanal kann dort angeordnet sein, wo das Filtermedium eine geringe Höhe aufweist.

Die Bauteile sind derart geneigt oder weisen geneigte Flächen auf, dass das Filterelement eine Keilform zeigt. Durch diese konkrete Ausgestaltung kann das Filterelement in schräge Bauräume Platz sparend eingefügt werden. Des Weiteren erlaubt die Keilform die Ausbildung einer hohen Wandfläche und einer niedrigen Wandfläche, wobei die hohe Wandfläche dem Strömungskanal gegenüberliegt und dadurch effektiv mit zu filterndem Fluid beaufschlagt werden kann.

Ein keilförmiges Filterelement mit einem seitlich angeordneten Strömungskanal kann besonders gut in enge Bauräume eingebaut werden, da die Höhe des Filterelements im Bereich der Ausbildung des Strömungskanals reduziert ist. Des Weiteren weist ein keilförmiges Filterelement zwei zueinander geneigte Ebenen auf und kann dadurch bei Kraftbeaufschlagung der Ebenen komprimiert werden

Vor diesem Hintergrund könnte das Filterelement mindestens einen seitlich angeordneten Strömungskanal zum durchströmbaren Volumen aufweisen. Ein lateral angeordneter Strömungskanal, dessen Achse im Wesentlichen orthogonal zu der Wandfläche des Filtermediums orientiert ist, erlaubt eine Verwendung des Filterelements in engen Bauräumen. Ein seitlich angeordneter Strömungskanal erlaubt, ein in das durchströmbare Volumen eingesaugtes Fluid in der Ebene des Filtermediums ausströmen zu lassen. Durch diese Ausgestaltung ist es möglich, das Filterelement als Motorzuluftfilter in modernen Kraftfahrzeugen auch in sehr engen Bauräumen einzusetzen.

Dem Strömungskanal könnte ein ihm abgewandter Bereich der Wandfläche gegenüberliegen. Durch diese konkrete Ausgestaltung kann ein Fluid effektiv durch das Filtermedium hindurchgesaugt und durch dieses gefiltert werden. Der vom Strömungskanal geführte Sog wird unmittelbar auf die Wandfläche gerichtet.

Der Strömungskanal könnte aus einem Bauteil herausgeformt und mit diesem integral ausgebildet sein. Durch diese konkrete Ausgestaltung kann das Filterelement aus drei Bauteilen, nämlich erstem und zweitem Bauteil sowie Filtermedium gefertigt werden. Vor diesem Hintergrund ist denkbar, dass im Filtermedium selbst Ausnehmungen ausgebildet sind, die ein Strömungskanal durchgreifen kann.

Der Strömungskanal könnte parallel zu der Oberfläche eines Bauteils orientiert sein. Durch diese konkrete Ausgestaltung ist eine sehr günstige Strömungsführung des eintretenden Fluids gewährleistet, da dass Fluid an der Oberfläche des Bauteils laminar entlangströmen kann.

Die bekannten Filterpatronen werden derzeit häufig in Knautschzonen und damit crash-relevanten Bereichen eines Kraftfahrzeugs angeordnet. Hierbei ist problematisch, dass die bekannten Filterpatronen auf Grund ihrer kompakten Bauweise und starren Form einen sehr großen Widerstand gegen Deformierungen bieten und die Deformierbarkeit des gesamten Ansaugsystems beschränken. Dies ist insbesondere dann kritisch, wenn ein Verkehrsteilnehmer, z.B. ein Fußgänger, mit einem Körperteil gegen einen Bereich der Karosserie stößt, unter dem ein solch hartes Bauelement angeordnet ist.

Im ungünstigsten Falle ist unter der Karosserie, beispielsweise der Motorhaube, in einem Ansaugsystem ein Filterelement aus Papier angeordnet. Dann ist die Deformierbarkeit des Ansaugsystems und damit der Karosserie durch das Filterelement so stark beschränkt, dass eine erhebliche Verletzungsgefahr des Verkehrsteilnehmers gegeben ist.

Aus diesem Grund müssen die bekannten Filterelemente derart von Karosseriebauteilen beabstandet angeordnet werden, dass eine problemlose Deformierbarkeit der Karosserie bzw. des Ansaugsystems gewährleistet ist. Die Folge hiervon sind ungenutzte Bauräume, insbesondere unter der Motorhaube.

Vor diesem Hintergrund ist das Filtermedium aus einem Vliesstoff gefertigt und derart gefaltet, dass ein Abstand zwischen den Bauteilen bei deren Kraftbeaufschlagung zumindest bereichsweise reversibel verringerbar ist.

Durch die Verwendung eines Vliesstoffes wird ein reversibel deformierbares Filterelement hergestellt, welches eine ausreichend große Filterfläche bietet. Die Filterleistung eines Papiers kann auch von einem Vliesstoff gewährleistet werden, der eine bestimmte Faltung bei geringerer Faltendichte aufweist. Dabei können die Faltenrücken zweier benachbarter Falten weiter beabstandet sein, als die eines Filtermediums aus Papier. Es kann also die Faltendichte verringert werden. Die weitere Beabstandung der Falten erlaubt ein Einknicken der Falten und damit eine problemlose Verringerung des Abstands zwischen den Bauteilen. Des Weiteren weist ein Vliesstoff eine besondere Elastizität auf, die eine reversible Deformierung des Filterelements ermöglicht. Dies gewährleistet eine bedingte Gebrauchstauglichkeit des Filterelements nach Deformierung durch einen Unfall, nämlich eine so genannte Notlaufeigenschaft.

Der Abstand zwischen den Bauteilen könnte um mindestens 20%, vorzugsweise um mindestens 75% verringerbar sein. Diese konkrete Ausgestaltung stellt sicher, dass ein Fußgänger, der mit einem Körperteil gegen die Karosserie eines Kraftfahrzeugs stößt, vor Verletzungen weitgehend geschont wird. Das Verietzungsrisiko wird hierdurch erheblich verringert.

Vor diesem Hintergrund ist denkbar, dass das Filtermedium Höhen h aufweist, die um mindestens 20%, vorzugsweise um mindestens 75% verringerbar sind. Bei dieser konkreten Ausgestaltung können die Bauteile aus einem harten Material gefertigt sein und müssen nahezu nichts zur Komprimierbarkeit des gesamten Filterelements beitragen. Insoweit ist ein besonders kostengünstiger Fertigungsprozess realisierbar, da die Bauteile aus herkömmlichen Kunststoffen gefertigt werden können. Insbesondere ist aber auch denkbar, dass die Bauteile aus einem verfestigten Vliesstoff gefertigt sind. Hierdurch ist ein materialeinheitlicher Aufbau des Filterelements realisierbar.

Die Komprimierbarkeit des Filterelements, das heißt dessen Kraft-Weg-Verhalten, könnte durch Modifizierung des verwendeten Vliesstoffs eingestellt werden. Diese Modifizierung könnte durch Verwendung von Fasern unterschiedlicher Biegesteifigkeit realisiert werden. Dabei könnten synthetische Fasern mit natürlichen Fasern in einem bestimmten Mischungsverhältnis miteinander verbunden werden. Die Steifigkeit des Vliesstoffes könnte auch durch unterschiedliche Fertigungsmethoden eingestellt werden. Beispielsweise könnte durch geeignete Wahl der Parameter einer Wasserstrahlvemadelung die Steifigkeit des Vliesstoffs eingestellt werden.

Der Vliesstoff könnte synthetische Fasern umfassen oder vollständig aus synthetischen Fasern bestehen. Hierbei ist denkbar, dass die synthetischen Fasern aus Polypropylen, Polyester oder Polybutadienterephtalat gefertigt sind. Einige Kraftfahrzeughersteller verlangen von einem gebrauchstauglichen Filterelement in Ansaugsystemen gemäß DIN ISO 5011 eine ganz konkrete Filterleistung, nämlich eine Abscheideleistung von mehr als 98 %. Nach dieser Norm zeigt ein Filterelement nur dann eine ausreichende Filterleistung, wenn 98 % der Teststäube in der zu filternden Luft im Filtermedium abgeschieden werden. Überraschenderweise hat sich gezeigt, dass ein Vliesstoff, der synthetische Fasern umfasst, diesen Anforderungen bei problemloser Deformierbarkeit genügt. Die problemlose Deformierbarkeit wird wesentlich durch einen relativ weiten Faltenabstand realisiert.

Das Filtermedium könnte aus einem thermoplastischen Vliesstoff gefertigt sein. Ein thermoplastischer Vliesstoff zeigt überraschenderweise eine hohe Komprimierbarkeit im gefalteten Zustand. Versuche haben ergeben, dass ein gefalteter Vliesstoff einer Höhe von 48 mm, der in Richtung der Faltenrücken mit Kraft beaufschlagt wird, bei 100 N um 28,32 mm komprimierbar ist. Bei 0, 5 N, 10 N, 20 N und 50 N ist der untersuchte Vliesstoff um 0, 0,4 mm, 2,76 mm, 9,54 mm bzw. 17,23 mm in seiner Höhe verringerbar. Der Kraftvektor ist bei dieser Messung parallel zu den Faltenrücken orientiert.

Die Kraftbeaufschlagung erfolgt dabei auf einer Vliesstofffläche von 40 mm Breite und 100 mm Länge.Bei dem verwendeten thermoplastischen Vliesstoff handelt es sich um einen Vliesstoff, der aus Polyesterfasern gefertigt ist. Der Vliesstoff weist kein Bindemittel auf, die Fasern sind vielmehr durch thermische Verfestigungsverfahren miteinander verschweißt. Der Vliesstoff weist ein Flächengewicht von 230 g/m² auf.

Es ist auch denkbar, Vliesstoffe einzusetzen, die ein Flächengewicht von 100 bis 500 g/m² aufweisen. Vliesstoffe dieser Flächengewichte weisen eine ausreichend hohe Eigensteifigkeit auf, um zwei Bauteile voneinander zu beabstanden und erbringen zugleich eine ausreichend hohe Filterleistung.

Des Weiteren erlaubt die Verwendung eines Vliesstoffs überraschenderweise die Beabstandung der Bauteile allein durch das Filtermedium, da der Vliesstoff aufgrund seiner Faserstruktur eine ausreichend hohe Eigensteifigkeit zeigt. Ein Vliesstoff weist auch nach Durchnässung und anschließender Trocknung im gegensatz zu Papier eine sehr hohe Reißfestigkeit und damit hohe Stabilität auf. Schließlich zeigt ein Vliesstoff aus synthetischem Material eine hohe Temperaturstabilität und eignet sich daher für den Einsatz in Motorräumen von Kraftfahrzeugen. Weitere Stabilisierungsmittel, die das Filtermedium bei der Beabstandung der Bauteile unterstützten, sind nicht zwingend notwendig. Hierdurch ist eine kostengünstige Fertigung des Filterelements realisierbar. Weitere Stabilisierungsmittel können aber vorgesehen werden, um die Deformierbarkeit des Filterelements definiert einzustellen.

Das Filtermedium könnte Falten aufweisen, deren Faltenstirnseiten den Bauteilen zugewandt sind. Diese konkrete Ausgestaltung erlaubt eine problemlose Verbindung des Filtermediums mit den Bauteilen. Vor diesem Hintergrund ist beispielsweise denkbar, dass den Bauteilen ein Klebstoff zugeordnet ist, in welchen die Faltenstimseiten eintauchen und somit einen Verbund mit den Bauteilen eingehen.

Die Faltenrücken zweier benachbarter Falten weisen einen Abstand von 0,5 bis 3 cm auf. Die Auswahl des Abstands aus diesem Bereich hat sich als besonders vorteilhaft erwiesen, um einerseits eine problemlose Deformierbarkeit des Filtermediums und andererseits eine noch ausreichend große effektive Filterfläche zur Verfügung zu stellen, die für die Motorzuluftfiltration notwendig ist. Filtermedien aus Papier können bei einem solchen Faltenrückenabstand keine ausreichende Filterleistung, d.h. keine von der KFZ-Industrie geforderte Abscheiderate, realisieren und sind daher für Ansaugsysteme ungeeignet.

Ganz konkret ist auch denkbar, dass die Falten mit Sollbiegestellen versehen sind, welche ein definiertes Einknicken des Filtermediums bei Kraftbeaufschlagung bewirken. Insbesondere ist denkbar, dass den Falten Konturen aufgeprägt sind, die ein bestimmtes Einknickverhalten der Falten bei Kraftbeaufschlagung der Bauteile vorgeben oder einleiten. Die Sollbiegestellen könnten durch Ultraschallschweißprozesse auf das Filtermedium aufgeprägt werden. Ultraschallschweißprozesse lassen sich besonders schnell und kostengünstig durchführen und ermöglichen eine problemlose bereichsweise Verjüngung eines Filtermediums. Denkbar ist auch, eine Prägung des Filtermediums allein durch Kraftbeaufschlagung zu realisieren.

Um eine problemlose Deformierbarkeit des Filterelements zu bewirken, könnten die Faltenrücken einen von 90° verschiedenen Winkel mit den Grundflächen der Bauteile einschließen. Die so geneigten Faltenrücken lassen sich dann problemlos und besonders leicht derart deformieren, dass sich die Bauteile einander annähern.

Denkbar ist auch, dass zwei oder mehr Falten in definierten Abständen derart miteinander verbunden sind, dass die Faltenwandungen oder Faltenflanken aneinander liegen. Es könnten Bereiche von zwei oder mehreren verbundenen Falten durch eine definierte Anzahl unverbundener Falten beabstandet sein. So könnten ganz konkret, jedoch nicht hierauf einschränkend beispielsweise alle fünf Falten zwei Falten miteinander verbunden sein. Hierdurch kann die Deformierbarkeit des Filterelements eingestellt werden. Die Faltenwandungen könnten miteinander verklebt, verschweißt oder formschlüssig miteinander verbunden sein. Eine Verklebung stellt einen sehr festen Verbund her. Eine Verschweißung lässt sich unter Aussteifung der Falten realisieren. Der formschlüssig Verbund lässt ein Ablösen der Falten voneinander unter bestimmten Umständen zu.

Zumindest ein Bauteil könnte aus einem Material gefertigt sein, das härter oder biegesteifer als das Filtermedium ist. Diese konkrete Ausgestaltung erlaubt eine Fertigung eines stabilen Filterelements, welches das Filtermedium gegen Schlag- und Stoßeinwirkungen schützt. Des Weiteren wird das Filtermedium vor Verschmutzungen geschützt. Vor diesem Hintergrund ist denkbar, dass zumindest ein Bauteil aus einem verfestigten Vliesstoff gefertigt ist.

Um eine kostengünstige Fertigung zu realisieren könnte zumindest ein Bauteil spritzgusstechnisch gefertigt sein. Hierbei ist denkbar, dass die Bauteile aus Polypropylen oder Polyamid gefertigt sind.

Zumindest ein Bauteil könnte geschäumt gefertigt sein. Ein solches Bauteil geht einen sehr guten Verbund mit dem Filtermedium ein, da das geschäumte Material die Falten des Filtermediums umfließen kann. Als geschäumtes Material könnte Polyurethan verwendet werden. Dieses Material ist problemlos verarbeitbar.

Denkbar ist auch, die Bauteile aus Metallen zu fertigen. Metalle geben dem Filterelement eine hohe Stabilität und Temperaturfestigkeit.

Zumindest einem Bauteil könnten Sollbruchmittel zugeordnet sein, welche die Bauteile in Ergänzung zu dem Filtermedium voneinander beabstanden. Hierdurch ist die Verwendung eines relativ harten Filtermediums möglich. Die Sollbruchmittel könnten derart ausgestaltet sein, dass sie bei einer ganz konkreten Kraftbeaufschlagung der Bauteile brechen und eine Deformierbarkeit des Filterelements sicherstellen.

Denkbar ist auch, dass zwischen den Bauteilen elastisch deformierbare Stabilisierungselemente angeordnet sind. Hierdurch ist ein Einfedern und Ausfedern der Bauteile möglich. Ganz konkret könnten die Stabilisierungselemente als Spiralfedern oder Blattfedern ausgebildet sein, da diese mechanisch sehr stabil und im Hinblick auf ihre Federkonstanten problemlos einstellbar sind.

Das Filterelement könnte als Luftfilter eines Kraftfahrzeugs ausgestaltet sein. Die problemlose Deformierbarkeit des erfindungsgemäßen Filterelements eignet es hervorragend für die Anordnung in einem Kraftfahrzeug direkt unter der Motorhaube, wo üblicherweise Luftfilter positioniert werden. Vor diesem Hintergrund ist denkbar, dass ein Bauteil als Abdeckung des Volumens im Luftfiltergehäuse fungiert, in welches das Filterelement eingesetzt wird. Dem Bauteil könnten zur Abdichtung des Volumens im Luftfiltergehäuse Dichtungen werksseitig zugeordnet sein. Hierdurch ist ein schneller Montageprozess realisierbar.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele des erfindungsgemäßen Filterelements anhand der Zeichnung zu verweisen.

In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer perspektivischen Ansicht ein Filterelement, welches aus zwei Bauteilen und einem Filtermedium besteht,
- Fig. 2: eine Schnittansicht des Filterelements gemäß Fig. 1,
- Fig. 3: eine Schnittansicht des Filterelements gemäß Fig, 1 in einer schematischen Ansicht, in der teilweise die Faltenrücken gezeigt sind, und
- Fig. 4: eine schematische Draufsicht auf ein rechteckiges Filterelement, in welchem die Faltenstirnseiten erkennbar sind, die den Bauteilen zugewandt sind.

### Ausführung der Erfindung

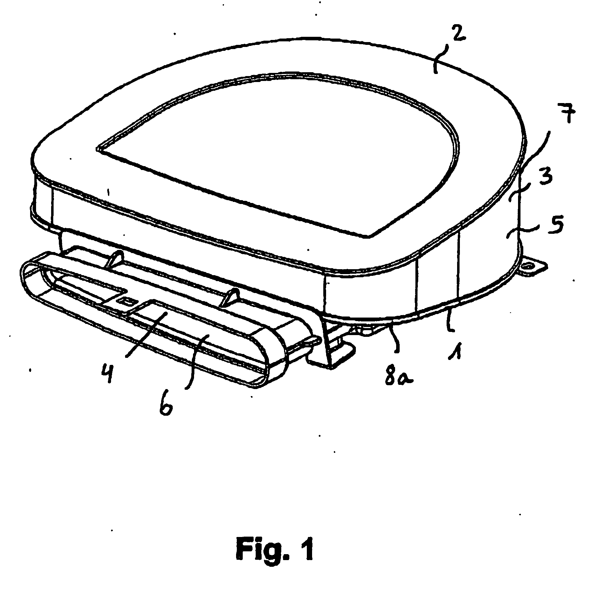

Fig. 1 zeigt ein Filterelement umfassend ein erstes Bauteil 1, ein zweites Bauteil 2 und ein zwischen den Bauteilen 1, 2 angeordnetes Filtermedium 3, wobei die Bauteile 1, 2 durch das Flitermedium 3 beabstandet sind. Die Bauteile 1, 2 und das Filtermedium 3 begrenzen ein durchströmbares Volumen 4, wobei das Filtermedium 3 eine umlaufende Wandfläche 5 ausbildet, durch die ein Fluid zur Filterung hindurchtreten kann. Das Filterelement weist einen seitlich angeordneten Strömungskanal 6 zum durchströmbaren Volumen 4 auf. Der Strömungskanal 6 ist lateral, nämlich seitlich und dadurch im Wesentlichen orthogonal zu der Wandfläche 5 des Filtermediums 3 orientiert. Dem Strömungskanal 6 liegt ein ihm abgewandter Bereich 7 der Wandfläche 5 gegenüber. Die Bauteile 1, 2 nehmen das Filtermedium 3 auf.

Der Strömungskanal 1 ist aus einem Bauteil 1 ausgeformt und mit diesem integral ausgebildet. Der Strömungskanal 6 ist dabei zu der Oberfläche 8 eines Bauteils parallel orientiert. Die Bauteile 1, 2 sind geneigt zueinander orientiert.

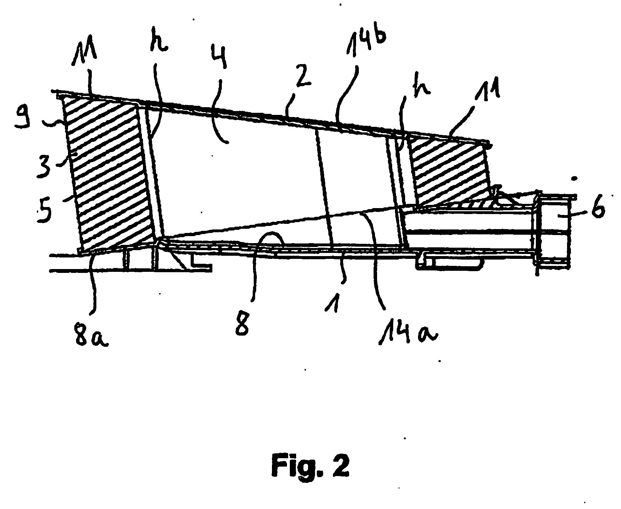

Fig. 2 zeigt eine Schnittansicht des Filterelements gemäß Fig. 1. Das Filterelement umfasst ein erstes Bauteil 1, ein zweites Bauteil 2 und ein zwischen den Bauteilen 1, 2 angeordnetes Filtermedium 3, wobei die Bauteile 1, 2 durch das Filtermedium 3 beabstandet sind. Die Bauteile 1, 2 und das Filtermedium 3 begrenzen ein durchströmbares Volumen 4, wobei das Filtermedium eine Wandfläche 5 ausbildet, durch die ein Fluid zur Filterung hindurchtreten kann. Das Filterelement weist einen seitlich angeordneten Strömungskanal 6 zum durchströmbaren Volumen 4 auf. Dem Strömungskanal 6 liegt ein ihm abgewandter Bereich 7 der Wandfläche 5 gegenüber. Dabei ist der Strömungskanal 6 aus dem Bauteil 1 herausgeformt und mit diesem integral ausgebildet. Der Strömungskanal 6 ist parallel zu der Oberfläche 8 des Bauteils 1 orientiert. Dabei sind die Bauteile 1, 2 geneigt zueinander orientiert und verleihen dem Filterelement eine Keilform.

Das Filtermedium der in den Fig. 1 bis 4 beschriebenen Filterelemente ist aus einem Vliesstoff gefertigt und derart gefaltet, dass ein Abstand zwischen den Bauteilen 1, 2 bei deren Kraftbeaufschlagung zumindest bereichsweise reversibel verringerbar ist. Dabei ist der Abstand um mindestens 20 %, vorzugsweise um mindestens 75 % verringerbar.

Das Filtermedium 3 weist Höhen h auf, die um mindestens 20 %, vorzugsweise um mindestens 75 % verringerbar sind. Fig. 2 ist entnehmbar, dass das Filtermedium 3 an verschiedenen Stellen verschiedene Höhen h aufweist Im Bereich des Strömungskanals 6 weist das Filtermedium 3 eine geringere Höhe auf als auf der dem Strömungskanal 6 abgewandten Seite.

Das Filtermedium 3 ist aus einem Vliesstoff gefertigt, der synthetische Fasern oder verschiedene Fasern unterschiedlicher Biegesteifigkeit umfasst Das Filtermedium 3 ist aus einem thermoplastischen Vliesstoff gefertigt.

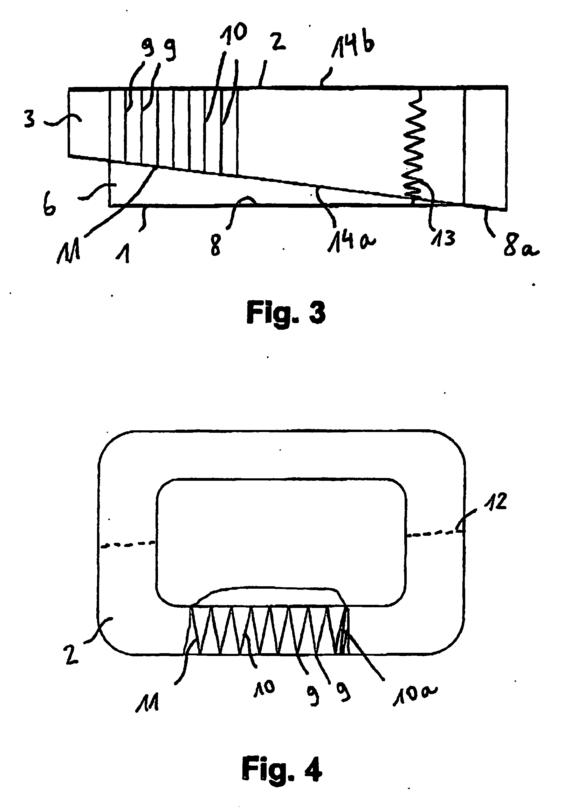

Fig. 3 zeigt in einer schematischen Schnittansicht des Filterelements gemäß Fig. 1 teilweise die Falten 10 des Filtermediums 3. Die Faltenrücken 9 zweier benachbarter Falten 10 weisen einen Abstand von 0,5 bis 3 cm auf. In Fig. 3 ist schematisch dargestellt, dass zumindest einem Bauteil 1, 2 elastische Stabilisierungselemente 13 zugeordnet sind. Das Stabilisierungselement 13 in Fig. 3 ist als Feder ausgestaltet, welche einem Zusammendrücken der Bauteile 1, 2 entgegenwirkt.

Fig. 4 zeigt in einer schematischen Draufsicht auf ein rechteckig ausgebildetes Filterelement die Faltenstimseiten 11, die einem durchbrochen dargestellten Bauteil 2 zugewandt und mit diesem verklebt oder von diesem umspritzt sind. Zwei oder mehr Falten 10 sind in definierten Abständen derart miteinander verbunden, dass die Faltenwandungen oder Faltenflanken 10a zumindest teilweise aneinander liegen. Zumindest einem Bauteil 1, 2 könnten Sollbruchmittel 12 zugeordnet sein, die in Fig. 4 durch eine gestrichelte Linie dargestellt sind. Die Sollbruchmittel 12 könnten durch eine Materialschwächung im Bauteil 2 ausgebildet sein.

Zumindest ein Bauteil 1, 2 der in den Fig. 1 bis 4 beschriebenen Filterelemente könnte aus einem Material gefertigt sein, das härter als das Filtermedium 3 ist. Dabei könnte zumindest ein Bauteil 1, 2 spritzgusstechnisch gefertigt sein.

Die Bauteile 1, 2 in den Fig. 1 bis 4 begrenzen zwei zueinander geneigte Ebenen 14a und 14b des Filtermediums 3. Ein abgeschrägtes im Wesentlichen zylinderförmiges Filtermedium 3 mit geneigten Grundflächen, nämlich den Ebenen 14a und 14b ist in die Bauteile 1, 2 eingeklebt oder von diesen umspritzt. Die Faltenstirnseiten 11 liegen in den geneigten Ebenen 14a und 14b und die Faltenrücken 9 erstrecken sich im Wesentlichen orthogonal oder nahezu orthogonal zu einer Fläche des Bauteils 1. Die Faltenrücken 9 schließen einen spitzen Winkel mit einer Fläche des Bauteils 1 ein.

Das Bauteil 2 in Fig. 2 ist im wesentlichen flach ausgebildet, das Bauteil 1 in Fig. 2 weist eine flache Oberfläche 8 auf, an der ein Kranz 8a geneigt angeformt ist. Die flache Oberfläche 8 erstreckt sich im Wesentlichen über die Breite des Strömungskanals 6. Der Kranz 8a ist angeordnet, um das abgeschrägte Filtermedium 3 aufzunehmen. Die Faltenrücken 9 bilden in Fig. 2 mit dem Kranz 8a einen rechten Winkel und schließen mit der Oberfläche 8 einen spitzen Winkel ein. Die Faltenrücken 9 schließen mit dem Bauteil 2 ebenfalls einen spitzen Winkel ein.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Filterelement, umfassend ein erstes Bauteil (1), ein zweites Bauteil (2) und ein zwischen den Bauteilen (1, 2) angeordnetes Filtermedium (3), wobei die Bauteile (1, 2) durch das Filtermedium (3) beabstandet sind, wobei die Bauteile (1, 2) und das Filtermedium (3) ein durchströmbares Volumen (4) begrenzen, wobei das Filtermedium (3) eine Wandfläche (5) ausbildet, durch die ein Fluid zur Filterung hindurchtreten kann, wobei die Bauteile (1, 2) als das Filtermedium (3) beidseitig abdeckende und aufnehmende Endkappen ausgebildet sind, wobei das Filtermedium (3) aus einem Vliesstoff gefertigt und derart gefaltet ist, dass ein Abstand zwischen den Bauteilen (1, 2) bei deren Kraftbeaufschlagung zumindest bereichsweise reversibel verringerbar ist und wobei die Faltenrücken (9) zweier benachbarter Falten (10) einen Abstand von 0,5 bis 3 cm aufweisen,
**dadurch gekennzeichnet, dass** die Bauteile (1, 2) geneigt zueinander orientiert sind oder zueinander geneigte Flächen aufweisen, wobei die Bauteile (1, 2) zwei zueinander geneigte Ebenen (14a, 14b) des Filtermediums (3) begrenzen, wobei das Flitermedium (3) an verschiedenen Stellen verschiedene Höhen h aufweist und wobei die Bauteile (1, 2) derart geneigt sind oder geneigte Flächen aufweisen, dass das Filterelement eine Keilform zeigt.

2. Filterelement nach Anspruch 1, **gekennzeichnet durch** mindestens einen seitlich angeordneten Strömungskanal (6) zum durchströmbare Volumen (4).

3. Filterelement nach Anspruch 2, **dadurch gekennzeichnet, dass** dem Strömungskanal (6) ein ihm abgewandter Bereich (7) der Wandfläche (5) gegenüberliegt.

4. Filterelement nach Anspruch 2 oder 3, **dadurch gekennzeichnet, dass** der Strörnungskanal (6) aus einem Bauteil (1) herausgeformt und mit diesem integral ausgebildet ist.

5. Filterelement nach einem der Ansprüche 2 bis 4, **dadurch gekennzeichnet, dass** der Strömungskanal (6) zu der Oberfläche (8) eines Bauteils (1) parallel orientiert ist.

6. Filterelement nach einem der Ansprüche 1 bis 5, **dadurch gekennzeichnet, dass** der Abstand um mindestens 20%, vorzugsweise um mindestens 75 % verringerbar ist.

7. Filterelement nach einem der Ansprüche 1 bis 6, **dadurch gekennzeichnet, dass** das Filtermedium (3) Höhen h aufweist, die um mindestens 20%, vorzugsweise um mindestens 75 % verringerbar sind.

8. Filterelement nach einem der Ansprüche 1 bis 7, **dadurch gekennzeichnet, dass** das Filtermedium (3) aus einem Vliesstoff gefertigt ist, der synthetische Fasern oder verschiedene Fasern unterschiedlicher Biegesteifigkeit umfasst.

9. Filterelement nach einem der Ansprüche 1 bis 8, **dadurch gekennzeichnet, dass** das Filtermedium (3) aus einem thermoplastischen Vliesstoff gefertigt ist.

10. Filterelement nach einem der Ansprüche 1 bis 9, **dadurch gekennzeichnet, dass** das Filtermedium (3) Falten (10) aufweist, deren Faltenstirnseiten (11) den Bauteilen (1, 2) zugewandt sind

11. Filterelement nach einem der Ansprüche 1 bis 10, **dadurch gekennzeichnet, dass** die Falten (10) mit Sollblegestellen versehen sind,

12. Filterelement nach einem der Ansprüche 1 bis 11, **dadurch gekennzeichnet, dass** zwei oder mehr Falten (10) in definierten Abständen derart miteinander verbunden sind, dass die Faltenwandungen oder Faltenflanken zumindest teilweise aneinander liegen.

13. Filterelement nach einem der Ansprüche 1 bis 12, **dadurch gekennzeichnet, dass** zumindest ein Bauteil (1, 2) aus einem Material gefertigt ist, das härter als das Filtermedium (3) ist.

14. Filterelement nach einem der Ansprüche 1 bis 13, **dadurch gekennzeichnet, dass** zumindest ein Bauteil (1, 2) spritzgusstechnisch gefertigt ist.

15. Filterelement nach einem der Ansprüche 1 bis 14, **dadurch gekennzeichnet, dass** zumindest einem Bauteil (1, 2) Sollbruchmittel (12) zugeordnet sind.

16. Filterelement nach einem der Ansprüche 1 bis 15, **dadurch gekennzeichnet, dass** zumindest einem Bauteil (1, 2) elastische Stabilisierungselemente (13) zugeordnet sind.

## Claims

1. Filter element, comprising a first component (1), a second component (2) and a filter medium (3) arranged between the components (1, 2), the components (1, 2) being spaced apart by means of the filter medium (3), the components (1, 2) and the filter medium (3) delimiting a throughflow volume (4), the filter medium (3) forming a wall surface (5), through which a fluid can pass for filtration, the components (1, 2) being designed as end caps covering the filter medium (3) on both sides and receiving the latter, the filter medium (3) being manufactured from a nonwoven and being folded in such a way that, when force is applied to the components (1, 2), a distance between these can be at least in regions reduced reversibly, and the fold backs (9) of two adjacent folds (10) having a spacing of 0.5 to 3 cm, **characterized in that** the components (1, 2) are oriented at an inclination with respect to one another or have surfaces inclined with respect to one another, the components (1, 2) delimiting two planes (14a, 14b) of the filter medium (3) which are inclined with respect to one another, the filter medium (3) having different heights h at different locations, and the components (1, 2) being inclined or having inclined surfaces in such a way that the filter element has a wedge form.

2. Filter element according to Claim 1, **characterized by** at least one laterally arranged flow duct (6) to the throughflow volume (4).

3. Filter element according to Claim 2, **characterized in that** the flow duct (6) has lying opposite it a region (7) of the wall surface (5) which faces away from it.

4. Filter element according to Claim 2 or 3, **characterized in that** the flow duct (6) is formed out of one component (1) and is produced integrally with this.

5. Filter element according to one of Claims 2 to 4, **characterized in that** the flow duct (6) is oriented parallel to the surface (8) of one component (1).

6. Filter element according to one of Claims 1 to 5, **characterized in that** the distance can be reduced by at least 20%, preferably by at least 75%.

7. Filter element according to one of Claims 1 to 6, **characterized in that** the filter medium (3) has heights h which can be reduced by at least 20%, preferably by at least 75%.

8. Filter element according to one of Claims 1 to 7, **characterized in that** the filter medium (3) is manufactured from a nonwoven which comprises synthetic fibres or various fibres of different flexural rigidity.

9. Filter element according to one of Claims 1 to 8, **characterized in that** the filter medium (3) is manufactured from a thermoplastic nonwoven.

10. Filter element according to one of Claims 1 to 9, **characterized in that** the filter medium (3) has folds (10), the fold end faces (11) of which face the components (1, 2).

11. Filter element according to one of Claims 1 to 10, **characterized in that** the folds (10) are provided with predetermined bending points.

12. Filter element according to one of Claims 1 to 11, **characterized in that** two or more folds (10) are connected to one another at defined intervals in such a way that the fold walls or fold flanks lie at least partially one against the other.

13. Filter element according to one of Claims 1 to 12, **characterized in that** at least one component (1, 2) is manufactured from a material which is harder than the filter medium (3).

14. Filter element according to one of Claims 1 to 13, **characterized in that** at least one component (1, 2) is manufactured by injection moulding.

15. Filter element according to one of Claims 1 to 14, **characterized in that** at least one component (1, 2) is assigned predetermined breaking means (12).

16. Filter element according to one of Claims 1 to 15, **characterized in that** at least one component (1, 2) is assigned elastic stabilizing elements (13).

## Revendications

1. Elément filtrant comprenant un premier composant (1), un deuxième composant (2) et un milieu filtrant (3) disposé entre les composants (1, 2), les composants (1, 2) étant espacés l'un de l'autre par le milieu filtrant (3), les composants (1, 2) et le milieu filtrant (3) limitant un volume (4) pouvant être parcouru par un écoulement, le milieu filtrant (3) constituant une surface de paroi (5), à travers laquelle un fluide peut passer en vue de sa filtration, les composants (1, 2) étant réalisés sous forme de capuchons d'extrémité recouvrant des deux côtés et recevant le milieu filtrant (3), le milieu filtrant (3) étant fabriqué en une étoffe non tissée et étant plié de telle sorte qu'une distance entre les composants (1, 2) puisse être réduite de manière réversible au moins en partie lors de leur sollicitation par une force et les dos des plis (9) de deux plis adjacents (10) présentant un espacement de 0,5 à 3 cm,
**caractérisé en ce que** les composants (1, 2) sont orientés de manière inclinée l'un vers l'autre ou présentent des surfaces inclinées l'une vers l'autre, les composants (1, 2) limitant deux plans inclinés l'un par rapport à l'autre (14a, 14b) du milieu filtrant (3) ; le milieu filtrant (3) présentant différentes hauteurs h à différents emplacements et les composants (1, 2) étant inclinés ou présentant des surfaces inclinées de telle sorte que l'élément filtrant présente une forme de clavette.

2. Elément filtrant selon la revendication 1, **caractérisé par** au moins un canal d'écoulement (6) disposé latéralement vers le volume (4) pouvant être parcouru par l'écoulement.

3. Elément filtrant selon la revendication 2, **caractérisé en ce qu'**en regard du canal d'écoulement (6) est disposée une région (7) de la surface de paroi (5) qui lui est opposée.

4. Elément filtrant selon la revendication 2 ou 3, **caractérisé en ce que** le canal d'écoulement (6) est formé à partir d'un composant (1) et est réalisé intégralement avec celui-ci.

5. Elément filtrant selon l'une quelconque des revendications 2 à 4, **caractérisé en ce que** le canal d'écoulement (6) est orienté parallèlement à la surface (8) d'un composant (1).

6. Elément filtrant selon l'une quelconque des revendications 1 à 5, **caractérisé en ce que** la distance peut être réduite d'au moins 20%, de préférence d'au moins 75%.

7. Elément filtrant selon l'une quelconque des revendications 1 à 6, **caractérisé en ce que** le milieu filtrant (3) présente des hauteurs h qui peuvent être réduites d'au moins 20%, et de préférence d'au moins 75%.

8. Elément filtrant selon l'une quelconque des revendications 1 à 7, **caractérisé en ce que** le milieu filtrant (3) est fabriqué en une étoffe non tissée qui comprend des fibres synthétiques ou différentes fibres de différente rigidité à la flexion.

9. Elément filtrant selon l'une quelconque des revendications 1 à 8, **caractérisé en ce que** le milieu filtrant (3) est fabriqué en une étoffe non tissée thermoplastique.

10. Elément filtrant selon l'une quelconque des revendications 1 à 9, **caractérisé en ce que** le milieu filtrant (3) présente des plis (10) dont les côtés frontaux des plis (11) sont tournés vers les composants (1, 2).

11. Elément filtrant selon l'une quelconque des revendications 1 à 10, **caractérisé en ce que** les plis (10) sont pourvus de points destinés à la flexion.

12. Elément filtrant selon l'une quelconque des revendications 1 à 11, **caractérisé en ce que** deux ou plusieurs plis (10) sont connectés les uns aux autres à des distances définies de telle sorte que les parois des plis ou les flancs des plis s'appliquent au moins en partie les uns contre les autres.

13. Elément filtrant selon l'une quelconque des revendications 1 à 12, **caractérisé en ce qu'**au moins un composant (1, 2) est fabriqué en un matériau qui est plus dur que le milieu filtrant (3).

14. Elément filtrant selon l'une quelconque des revendications 1 à 13, **caractérisé en ce qu'**au moins un composant (1, 2) est fabriqué par une technique de moulage par injection.

15. Elément filtrant selon l'une quelconque des revendications 1 à 14, **caractérisé en ce que** des moyens destinés à la rupture (12) sont associés à au moins un composant (1, 2).

16. Elément filtrant selon l'une quelconque des revendications 1 à 15, **caractérisé en ce que** des éléments de stabilisation élastiques (13) sont associés à au moins un composant (1, 2).
